(19) Europäisches Patentamt / European Patent Office / Office européen des brevets

(11) **EP 3 011 485 B1**

(12) **FASCICULE DE BREVET EUROPEEN**

(45) Date de publication et mention de la délivrance du brevet:
**19.10.2022 Bulletin 2022/42**

(21) Numéro de dépôt: **14759012.9**

(22) Date de dépôt: **23.07.2014**

(51) Classification Internationale des Brevets (IPC):
**G06F 30/15** (2020.01) **G06F 30/20** (2020.01)
**B60C 99/00** (2006.01)

(52) Classification Coopérative des Brevets (CPC):
**B60C 99/006; G06F 30/15; G06F 30/20**

(86) Numéro de dépôt international:
**PCT/FR2014/051911**

(87) Numéro de publication internationale:
**WO 2015/015094 (05.02.2015 Gazette 2015/05)**

(54) **PROCÉDÉ DE SIMULATION DE RAYON DE ROULEMENT DE PNEUMATIQUE DE VÉHICULE AUTOMOBILE**

VERFAHREN ZUR SIMULATION EINES ROLLRADIUS EINES KRAFTFAHRZEUGREIFENS

METHOD FOR SIMULATING A ROLLING RADIUS OF A MOTOR VEHICLE TYRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.08.2013 FR 1357694**

(43) Date de publication de la demande:
**27.04.2016 Bulletin 2016/17**

(73) Titulaire: **Compagnie Générale des Etablissements Michelin**
**63000 Clermont-Ferrand (FR)**

(72) Inventeurs:
• **BUISSON, Jérémy**
**F-63040 Clermont-Ferrand Cedex 9 (FR)**
• **VIRIN, Teddy**
**F-63040 Clermont-Ferrand Cedex 9 (FR)**

(74) Mandataire: **Roussy, Delphine**
**M. F. P. MICHELIN**
**23, place des Carmes-Déchaux**
**Service juridique - Propriété Intellectuelle**
**DCJ/PI - F35 - Site de Ladoux**
**63040 Clermont-Ferrand Cedex 9 (FR)**

(56) Documents cités:
• **WANG LIQIANG ET AL: "Research of Tire Rolling Radius Based On the Finite Vibration Unit Model", IOSR JOURNAL OF ENGINEERING, vol. 03, no. 04, avril 2013 (2013-04), pages 49-53, XP055115564, ISSN: 2278-8719, DOI: 10.9790/3021-03414953**
• **BENOIT DURAND-GASSELIN ET AL: "Assessing the thermo-mechanical TaMeTirE model in offline vehicle simulation and driving simulator tests", VEHICLE SYSTEM DYNAMICS, vol. 48, no. sup1, décembre 2010 (2010-12), pages 211-229, XP055111255, ISSN: 0042-3114, DOI: 10.1080/00423111003706730**
• **Leon Merkx: "Overturning moment analysis using the Flat plank tyre tester", DCT 2004-78, 2004, XP055111335, Extrait de l'Internet: URL:http://alexandria.tue.nl/repository/books/625826.pdf [extrait le 2014-04-01]**
• **K. GUO ET AL: "UniTire: unified tire model for vehicle dynamic simulation", VEHICLE SYSTEM DYNAMICS, vol. 45, no. sup1, 2007, pages 79-99, XP055111320, ISSN: 0042-3114, DOI: 10.1080/00423110701816742**
• **ZENG-XIN YU ET AL: "A Simple Analysis Method for Contact Deformation of Rolling Tire", VEHICLE SYSTEM DYNAMICS, vol. 36, no. 6, décembre 2001 (2001-12), pages 435-443, XP055115566, ISSN: 0042-3114, DOI: 10.1076/vesd.36.6.435.3543**

**Description**

L'invention concerne les procédés de détermination du rayon de roulement d'un pneumatique.

Le rayon de roulement caractérise le nombre de révolutions nécessaires au pneumatique pour parcourir une distance donnée, hors application de couple moteur ou freineur, c'est-à-dire avec une vitesse linéaire dans l'aire de contact équivalente à celle du sol, laquelle est typiquement nulle.

En roulage, sous conditions typiques de celles rencontrées sur un véhicule susceptible d'être équipé d'un pneumatique donné, les conditions couvrent une large gamme d'usages, depuis le roulage en ligne droite jusqu'au roulage à grande vitesse sur circuit.

Le comportement routier des véhicules met en œuvre des phénomènes complexes, en particulier au niveau des pneumatiques. La prise en compte de ces phénomènes pour comprendre, analyser et simuler le comportement est essentielle pour améliorer celui-ci. Pour cela, les outils de simulation requièrent des modèles descriptifs de la contribution des pneumatiques. Différentes grandeurs associées au torseur du pneumatique ou à sa géométrie en roulage sont mises en oeuvre ; ainsi en est-il pour le rayon effectif de roulement. Celui-ci est ainsi particulièrement important pour rendre compte des actions d'accélération et de freinage d'un véhicule. On peut ainsi l'appliquer a des stratégies de démarrage tels que launch control selon la terminologie anglosaxone ou contrôle de lancement, effectuée en compétition par exemple ou de freinage par estimation du suivi d'une cible de glissement d'un système ABS - pour Antiblockiersystem en allemand ou système antiblocage des roues - par exemple. Sur ce sujet il est connu de l'état de l'art les documents :

XP055111320 UniTire unified tire model for vehicle dynamic simulation.
XP055111255 Assessing the thermo-mechanical TaMeTirE model in offline vehicle simulation and driving simulator tests.
XP055111274 Modelling of tire overtuning moment and loaded radius.
XP055111335 Overturning moment analysis using the Flat plank tyre tester.
XP055115564 Research of Tire Rolling Radius Based On the Finite Vibration Unit Model.
XP055115566 A Simple Analysis Method for Contact Déformation of Rolling Tire.
JP2004161210 Preparing method for structure model predicting method for tire performance, tire manufacturing method, tire and program.
WO2012071379 Diagnostic tire test method.

Différentes formulations mathématiques ont déjà été proposées pour rendre compte de l'évolution du rayon de roulement d'un pneumatique. Parmi celles-ci, on peut citer différentes versions des formulations dites « formules magiques » de H.B. Pacejka, dont la version la plus diffusée MF-5.2 ou la dernière variante MF-6.1. La formulation MF-5.2 la plus usitée actuellement décrit le rayon effectif de roulement comme suit :

$$\rho_{F_{z0}} = \frac{F_{z0}}{C_z}$$

$$\rho^d = \frac{\rho}{\rho_{F_{z0}}}$$

avec $\rho$ la flèche du pneumatique et $C_z$ sa raideur verticale

$$R_e = R_0 - \rho_{F_{z0}}(D\arctan(B\rho^d) + F\rho^d)$$

Le but de l'invention est de proposer un procédé pour l'estimation du rayon de roulement du pneumatique présentant une meilleure acuité et une grande simplicité de mise en œuvre.

Ce but est atteint selon l'invention grâce à un procédé de réalisation de pneumatique de véhicule automobile, comportant une étape d'estimation de rayon effectif de roulement $R_{roul}$ du pneumatique par une formule de la forme :

$$Rroul = Rroul_1 + Rroul_2 + Rroul_3,$$

où :

$$Rroul_1 = Rroul_{11} - \left[\left(\kappa_{11} + \kappa_{12} * \frac{fleche}{Pg}\right)\right] * \left(1 - \exp\left(\frac{-fleche}{Pg * Rroul_{16}}\right)\right)$$

Avec:

$$\kappa_{11} = Rroul_{12} + Rroul_{13} * V$$

$$\kappa_{12} = Rroul_{14} + Rroul_{15} * V$$

$$Rroul_2 = \left(Rroul_{21} + Rroul_{22} * sign(\delta) * V\right) * \frac{1}{Fz^{Rroul_{23}}} * \left(1 - \cos(|\delta|)\right) - \frac{Rroul_{24}}{\pi} \ldots$$

$$* \left(1 - \exp\left(\frac{-Fz}{Rroul_{25}}\right)\right) * \frac{1}{V^{Rroul_{26}}} \ldots$$

$$* \left[\arctan\left(Rroul_{27} * |\delta| - Rroul_{28} * \exp\left(\frac{-Fz}{Rroul_{29}}\right) * \frac{1}{V^{Rroul_{30}}}\right) + \frac{\pi}{2}\right].$$

Et :

$$Rroul_3 = \left(\kappa_{31} + \kappa_{32} * sign(\delta * \gamma)\right) * \left(1 - \cos(|\gamma|)\right)$$

Avec :

$$\kappa_{31} = Rroul_{33} + Rroul_{34} * \left(1 - \exp\left(\frac{-Fz}{Rroul_{35}}\right)\right)$$

$$\kappa_{32} = Rroul_{36} + Rroul_{37} * Fz$$

où les paramètres $Rroul_{ij}$ sont des valeurs numériques, V est la vitesse du véhicule, flèche est la flèche du pneumatique, Pg est la pression de gonflage du pneumatique, $F_Z$ est la charge verticale sur le pneumatique, $\delta$ est l'angle de dérive, $\gamma$ est l'angle de carrossage.

Avantageusement, la flèche du pneumatique est déterminée par la formule suivante :

$$fleche = \frac{F_Z}{K_{ZZ}} + \left(\frac{R_{eY1}}{p} + R_{eY2}\right) \cdot |F_Y| - R_{e\gamma} \cdot |\gamma|$$

où $K_{ZZ}$ est la raideur verticale du pneumatique avec ses composantes pneumatique $K_{ZZp}$ et structurelle $K_{ZZ0}$ et $K_{ZZ}$ s'écrit sous la forme $K_{ZZ} = K_{ZZ0} + K_{ZZp} \times Pg$, $F_Y$ est l'effort de poussée transversale exercé sur le pneumatique, $\gamma$ est l'angle de carrossage du véhicule, $R_{e\gamma}$ est le coefficient d'influence du carrossage sur la flèche, p est la pression de gonflage, $R_{eY1}$ est un coefficient qui règle la dépendance de la flèche avec l'effort de poussée transversale exercé et avec la pression de gonflage p et $R_{eY2}$ est un coefficient qui règle la dépendance de la flèche avec l'effort de poussée transversale exercé sans effet de la pression de gonflage.

Avantageusement, les valeurs $Rroul_{ij}$ sont définies par des essais physiques sur un pneumatique représentatif du pneumatique à concevoir.

Avantageusement, les essais physiques sont réalisés à l'aide d'une rouleuse de type sol plan.

Avantageusement, le procédé inclut l'étape consistant à utiliser le logiciel TameTire

Avantageusement, le procédé comporte l'étape consistant à utiliser les valeurs $Rroul_{ij}$ dans le logiciel TameTire.

L'invention concerne également un processeur de calcul de comportement de pneumatique de véhicule automobile configuré pour estimer un rayon effectif de roulement du pneumatique et configuré pour déterminer le rayon effectif de roulement Rroul en mettant en œuvre une formule de la forme :

$$Rroul = Rroul_1 + Rroul_2 + Rroul_3,$$

où :

$$Rroul_1 = Rroul_{11} - \left[\left(\kappa_{11} + \kappa_{12} * \frac{fleche}{Pg}\right)\right] * \left(1 - \exp\left(\frac{-fleche}{Pg * Rroul_{16}}\right)\right)$$

Avec :

$$\kappa_{11} = Rroul_{12} + Rroul_{13} * V$$

$$\kappa_{12} = Rroul_{14} + Rroul_{15} * V$$

$$Rroul_2 = \left(Rroul_{21} + Rroul_{22} * sign(\delta) * V\right) * \frac{1}{Fz^{Rroul_{23}}} * \left(1 - \cos(|\delta|)\right) - \frac{Rroul_{24}}{\pi} \ldots$$

$$* \left(1 - \exp\left(\frac{-Fz}{Rroul_{25}}\right)\right) * \frac{1}{V^{Rroul_{26}}} \ldots$$

$$* \left[\arctan\left(Rroul_{27} * |\delta| - Rroul_{28} * \exp\left(\frac{-Fz}{Rroul_{29}}\right) * \frac{1}{V^{Rroul_{30}}}\right) + \frac{\pi}{2}\right].$$

Et :

$$Rroul_3 = \left(\kappa_{31} + \kappa_{32} * sign(\delta * \gamma)\right) * \left(1 - \cos(|\gamma|)\right)$$

Avec :

$$\kappa_{31} = Rroul_{33} + Rroul_{34} * \left(1 - \exp\left(\frac{-Fz}{Rroul_{35}}\right)\right)$$

$$\kappa_{32} = Rroul_{36} + Rroul_{37} * Fz$$

où les paramètres $Rroul_{ij}$ sont des valeurs numériques, V est la vitesse du véhicule, flèche est la flèche du pneumatique, Pg est la pression de gonflage du pneumatique, $F_Z$ est la charge verticale sur le pneumatique, $\delta$ est l'angle de dérive, $\gamma$ est l'angle de carrossage.

Avantageusement, la flèche du pneumatique est déterminée par la formule suivante :

$$flèche = \frac{F_Z}{K_{ZZ}} + \left(\frac{R_{eY1}}{p} + R_{eY2}\right) \cdot |F_Y| - R_{e\gamma} \cdot |\gamma|$$

où $K_{ZZ}$ est la raideur verticale du pneumatique avec ses composantes pneumatique $K_{ZZp}$ et structurelle $K_{ZZ0}$ et $K_{ZZ}$ s'écrit sous la forme $K_{ZZ} = K_{ZZ0} + K_{ZZp} \times Pg$, $F_Y$ est l'effort de poussée transversale exercé sur le pneumatique, $\gamma$ est l'angle de carrossage du véhicule, $R_{e\gamma}$ est le coefficient d'influence du carrossage sur la flèche, p est la pression de gonflage, $R_{eY1}$ est un coefficient qui règle la dépendance de la flèche avec l'effort de poussée transversale exercé et avec la pression de gonflage p et $R_{eY2}$ est un coefficient qui règle la dépendance de la flèche avec l'effort de poussée transversale exercé sans effet de la pression de gonflage.

Avantageusement, les valeurs Rroul$_{ij}$ sont définies par des essais physiques sur un pneumatique représentatif du pneumatique à concevoir.

L'invention concerne également un pneumatique de véhicule automobile obtenu en mettant en œuvre une simulation d'un rayon effectif de roulement R$_{roul}$ du pneumatique par une formule de la forme :

$$Rroul = Rroul_1 + Rroul_2 + Rroul_3 ,$$

où :

$$Rroul_1 = Rroul_{11} - \left[\left(\kappa_{11} + \kappa_{12} * \frac{fleche}{Pg}\right)\right] * \left(1 - \exp\left(\frac{-fleche}{Pg * Rroul_{16}}\right)\right)$$

Avec :

$$\kappa_{11} = Rroul_{12} + Rroul_{13} * V$$

$$\kappa_{12} = Rroul_{14} + Rroul_{15} * V$$

$$Rroul_2 = \left(Rroul_{21} + Rroul_{22} * sign(\delta) * V\right) * \frac{1}{Fz^{Rroul_{23}}} * \left(1 - \cos(|\delta|)\right) - \frac{Rroul_{24}}{\pi} \ldots$$

$$* \left(1 - \exp\left(\frac{-Fz}{Rroul_{25}}\right)\right) * \frac{1}{V^{Rroul_{26}}} \ldots$$

$$* \left[\arctan\left(Rroul_{27} * |\delta| - Rroul_{28} * \exp\left(\frac{-Fz}{Rroul_{29}}\right) * \frac{1}{V^{Rroul_{30}}}\right) + \frac{\pi}{2}\right].$$

Et :

$$Rroul_3 = \left(\kappa_{31} + \kappa_{32} * sign(\delta * \gamma)\right) * \left(1 - \cos(|\gamma|)\right)$$

Avec :

$$\kappa_{31} = Rroul_{33} + Rroul_{34} * \left(1 - \exp\left(\frac{-Fz}{Rroul_{35}}\right)\right)$$

$$\kappa_{32} = Rroul_{36} + Rroul_{37} * Fz$$

où les paramètres $Rroul_{ij}$ sont des valeurs numériques, V est la vitesse du véhicule, flèche est la flèche du pneumatique, Pg est la pression de gonflage du pneumatique, $F_Z$ est la charge verticale sur le pneumatique, $\delta$ est l'angle de dérive, $\gamma$ est l'angle de carrossage.

D'autres caractéristiques, buts et avantages de l'invention apparaitront à la lecture de la description qui va suivre, faite en référence aux figures annexées sur lesquelles :

- La figure 1 représente une évolution du rayon de roulement en fonction de la charge, pour un pneumatique selon l'invention,
- La figure 2 représente une évolution du rayon de roulement en fonction de l'angle de carrossage, pour un pneumatique selon l'invention.

Le rayon de roulement d'un pneumatique $R_{roul}(m)$ s'avère dépendre d'un grand nombre de facteurs parmi lesquels on retient la flèche du pneu $fleche(m)$, la charge verticale sur le pneumatique $F_Z(N)$, la raideur verticale du pneumatique $K_{ZZ}(Nm^{-1})$ avec ses composantes pneumatique $K_{ZZp}(Nm^{-1})$ et structurelle $K_{ZZ0}(Nm^{-1})$, la vitesse de roulage $V(ms^{-1})$, la pression de gonflage $Pg(bar)$, l'effort de poussée transversale exercé $F_Y(N)$,

l'angle de carrossage $\gamma(°)$, l'angle de dérive $\delta(°)$, le rayon écrasé du pneumatique $R_l(m)$.

L'ensemble de ces grandeurs doit donc préférentiellement être connu, par exemple mesuré, pour accéder au rayon de roulement du pneumatique au travers d'une formulation mathématique. Il se définit à couple, moteur ou freineur, nul. On procèdera alors à une identification des contributions de ces différents facteurs pour ensuite pouvoir utiliser la formulation exposée ci-dessous.

Afin de rendre compte de ces phénomènes, on retient ici la formulation suivante :

$$Rroul = Rroul_1 + Rroul_2 + Rroul_3,$$

où :

$$Rroul_1 = Rroul_{11} - \left[\left(\kappa_{11} + \kappa_{12} * \frac{fleche}{Pg}\right)\right] * \left(1 - \exp\left(\frac{-fleche}{Pg * Rroul_{16}}\right)\right)$$

Avec :

$$\kappa_{11} = Rroul_{12} + Rroul_{13} * V$$

$$\kappa_{12} = Rroul_{14} + Rroul_{15} * V$$

Ce premier terme traduit les influences de la charge via la flèche, la pression de gonflage et la vitesse sur le rayon de roulement en roulage sans braquage (ni dérive ni carrossage).

$$Rroul_2 = \left(Rroul_{21} + Rroul_{22} * sign(\delta) * V\right) * \frac{1}{Fz^{Rroul_{23}}} * \left(1 - \cos\left(|\delta|\right)\right) - \frac{Rroul_{24}}{\pi} \dots$$

$$* \left(1 - \exp\left(\frac{-Fz}{Rroul_{25}}\right)\right) * \frac{1}{V^{Rroul_{26}}} \dots$$

$$* \left[\arctan\left(Rroul_{27} * |\delta| - Rroul_{28} * \exp\left(\frac{-Fz}{Rroul_{29}}\right) * \frac{1}{V^{Rroul_{30}}}\right) + \frac{\pi}{2}\right].$$

Ce second terme prend en compte l'influence de la dérive et des termes couplés à la dérive.

$$Rroul_3 = \left(\kappa_{31} + \kappa_{32} * sign(\delta * \gamma)\right) * \left(1 - \cos\left(|\gamma|\right)\right)$$

Avec:

$$\kappa_{31} = Rroul_{33} + Rroul_{34} * \left(1 - \exp\left(\frac{-Fz}{Rroul_{35}}\right)\right)$$

$$\kappa_{32} = Rroul_{36} + Rroul_{37} * Fz$$

Ce $3^{\text{ème}}$ terme prend en compte les effets du carrossage et des termes couplés qui y sont liés.

Dans le cas du rayon de roulement, $R_{roul}(m)$, la flèche vaut :

$$fl\grave{e}che = \frac{F_Z}{K_{ZZ}} + \left(\frac{R_{eY1}}{p} + R_{eY2}\right) \cdot |F_Y| - R_{e\gamma} \cdot |\gamma|$$

avec

$$K_{ZZ} = K_{ZZ0} + K_{ZZp} \times Pg$$

où on introduit les coefficients suivants. $R_{1i}$ sont les coefficients pneumatiques du rayon de roulement qui déterminent l'évolution avec la pression, $R_{2i}$ sont les coefficients pneumatiques du rayon de roulement qui déterminent l'évolution avec la vitesse et la charge, $R_{3i}$ sont les coefficients pneumatiques du rayon de roulement qui déterminent l'évolution avec le carrossage, $R_{RR}(N/m)$ est la rigidité radiale pneumatique à pression nulle. On introduit également des coefficients qui règlent la dépendance de la flèche avec l'effort de poussée transversale exercé $R_{eY2}$ et aussi avec la pression $R_{eY1}$. $R_{e\gamma}$ est le coefficient d'influence du carrossage sur la flèche.

Si le rayon de roulement du pneumatique, $R_{roul}(m)$ est inférieur au rayon écrasé $R_l(m)$, la valeur du rayon de roulement pneumatique devient $R_l(m)$.

La stratégie d'identification ou d'obtention des coefficients listés ci-dessus repose d'une part sur la connaissance des grandeurs $fleche(m)$,..., $R_l(m)$. Elle repose d'autre part sur la réalisation d'un plan d'expérience ou animation de mesure couvrant un large domaine pour chacune de ces grandeurs, dans une enveloppe globalement réaliste par rapport à l'usage du pneumatique. Elle repose enfin sur l'optimisation du jeu de coefficients grâce à un algorithme approprié.

A partir d'une animation réalisée sur une machine de mesures appropriée, par exemple rouleuse de type sol plan, on accède à la connaissance des réponses du rayon écrasé du pneumatique en fonction des grandeurs retenues.

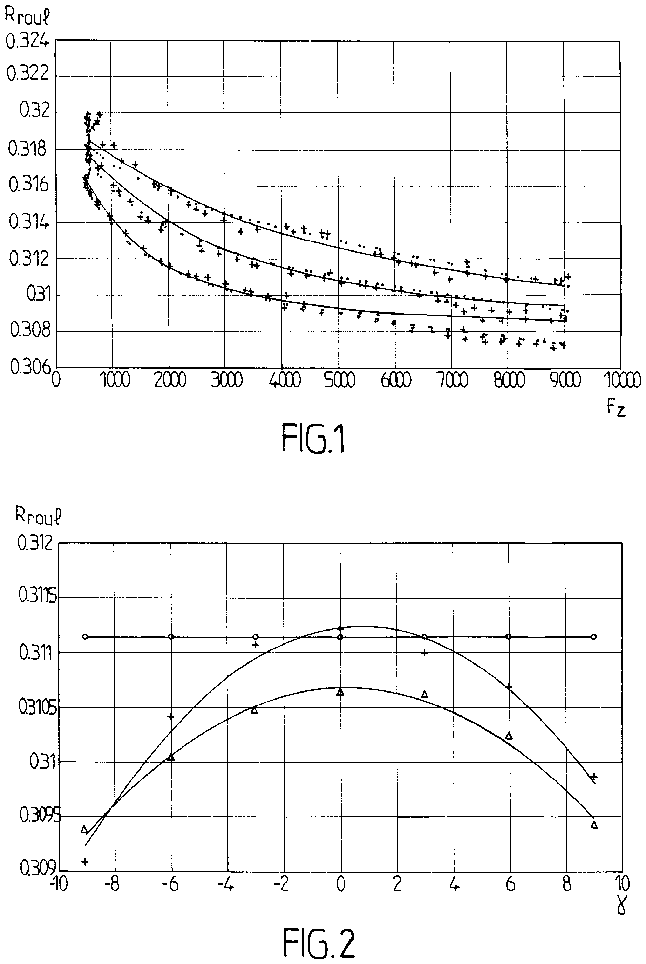

Le rayon libre étant la valeur du rayon écrasé obtenue à charge nulle, on y accède par extrapolation de la mesure du rayon écrasé en roulage simple, c'est-à-dire sans angles de dérive, sans carrossage ou courbure, ni couple moteur ou freineur, à différentes charges jusqu'à une valeur de charge nulle. La valeur du rayon effectif de roulement à charge nulle est équivalente au rayon libre. La figure 1 représente l'évolution du rayon effectif de roulement en fonction de la charge. Sur la figure 1, les tracés en trait continu sont des simulations à différentes pressions avec la formule exposée ci-dessus, les tracés en pointillés, points et croix sont des simulations avec la formule MF 5.2.

On constate en parallèle l'effet de la pression sur la dépendance du rayon effectif de roulement à la charge. De cette façon on a accès à l'effet charge.

On constate également que le rayon effectif de roulement varie globalement linéairement avec la vitesse. On constate que l'évolution du rayon de roulement avec la vitesse n'est pas triviale. En effet, les effets centrifugation et échauffement par exemple peuvent se compenser en fonction de l'état thermomécanique du pneumatique par exemple.

En ce qui concerne l'effet de l'angle de dérive, on constate que le rayon effectif de roulement varie également avec l'angle de dérive. Ces variations peuvent présenter, à moyennes et fortes charges, un saut assez brutal pour des angles de l'ordre de 1 degré de dérive.

Le rayon écrasé varie également avec l'angle de carrossage, comme illustré sur la figure 2. Sur la figure 2, les tracés de forme courbe représentent les résultats obtenus par la mesure et avec le modèle proposé, le tracé de forme sensiblement horizontale représente les résultats obtenus avec le modèle MF 5.2.

Les constats précédents sont alors intégrés à une stratégie d'obtention des coefficients du modèle de rayon écrasé. On procède également à une stratégie d'obtention des coefficients du modèle de flèche et donc d'effort transversal. Ces stratégies comportent différentes étapes qui peuvent être répétées itérativement afin d'améliorer la correspondance entre le modèle et la mesure de référence. Les modèles de rayon effectif de roulement et d'effort transversal sont intégrés au sein d'un modèle global TameTire permettant de prendre en compte les interactions réciproques de l'un sur l'autre.

Le modèle TameTire est un modèle thermomécanique développé pour améliorer la prédiction des efforts en centre de roue pour les études de comportement du véhicule. La principale motivation vient du constat que les modèles mathématiques de type Magic Formula ne prennent pas en compte les effets de la température voire de la vitesse qui sont significatifs sur les efforts pneu. En particulier ces modèles ne sont valables, a priori, que dans le domaine de mesure sur lequel ils ont été ajustés et ne permettent pas des extrapolations fiables lorsqu'on souhaite simuler des manoeuvres différentes du véhicule. Le modèle TaMeTirE calcule les efforts longitudinaux et latéraux en fonction de grandeurs physiques du pneu telles que dimension de l'aire de contact, rigidités des flancs, du bloc sommet, de la bande de roulement, propriétés de la gomme et des caractéristiques de frottement. Les caractéristiques du mélange entre module et coefficient d'adhérence sont couplées aux températures du pneu.

La formulation présentée dans ce mode de réalisation permet l'accès à une expression relativement simple, au travers d'un modèle mathématique, la valeur du rayon effectif de roulement d'un pneumatique en fonction des grandeurs pertinentes, et aisément mesurables sur une machine de test mécanique, via un jeu de coefficients accessible au travers d'une optimisation rapide.

La mise en œuvre d'une telle formulation repose ensuite sur la connaissance des grandeurs impliquées, qui sont, dans un outil de simulation, soit des grandeurs d'entrée telles que charge, vitesse, pression, carrossage, ou des grandeurs dépendantes du pneumatique telles que flèche ou effort transversal. Ces grandeurs intermédiaires doivent pouvoir se déduire des grandeurs d'entrée pour réaliser une simulation.

On accède ainsi à une expression du rayon effectif de roulement qui intègre également les effets de la température interne et de la température de surface, mais aussi ceux de la dérive et du carrossage, utilisable directement dans un outil de simulation. On accède ainsi à une modélisation plus fine du rayon effectif de roulement, en particulier avec la prise en compte des angles de dérive et de carrossage.

Les résultats montrent une meilleure acuité du modèle ici proposé par rapport aux modèles connus. Le modèle de rayon effectif de roulement gagne en précision, ce qui est très valorisable dans la gestion des accélérations et des freinages aux limites de l'adhérence. En effet, cette limite optimale est atteinte pour un niveau particulier de glissement, et il est donc crucial de maîtriser cette grandeur, par exemple pour un système ABS, un système d'anti-patinage ou même un calcul de type « launch control ». Le modèle de rayon effectif de roulement permet alors d'exploiter pleinement les avantages du modèle TameTire pour le calcul de l'effort longitudinal, avec la prise en compte des effets thermiques, la rapidité de calcul et la pertinence associée aux bases physiques de ce modèle.

L'ensemble peut être implémenté au sein de logiciels de simulation de la dynamique des véhicules pour la réalisation de manœuvres plus réalistes, en particulier dans les situations aux limites d'adhérence longitudinale du véhicule telles que manœuvres de sécurité du type freinage d'urgence ou encore manoeuvres de performance du type départ arrêté. La présélection de composants du véhicule tels que liaisons au sol, pneumatiques, ou leur réglage, par exemple au travers des liaisons au sol ou encore de l'ESP pour Electronic Stability Program en anglais ou Électro-Stabilisateur Programmé, ou encore de l'ABS ou de l'antipatinage, peut alors être réalisée plus efficacement.

L'invention est définie par l'objet des revendications indépendantes. Les revendications dépendantes définissent des modes de réalisation préférés.

## Revendications

**1.** Procédé de réalisation de pneumatique de véhicule automobile, **caractérisé :**

- **en ce que** le procédé comporte les étapes suivantes :

-- mise en œuvre dans un programme d'un logiciel d'un outil de simulation, d'une formule d'estimation de rayon effectif de roulement $R_{roul}$ du pneumatique de la forme :

$$Rroul = Rroul_1 + Rroul_2 + Rroul_3,$$

où :

$$Rroul_1 = Rroul_{11} - \left[\left(\kappa_{11} + \kappa_{12} * \frac{fleche}{Pg}\right)\right] * \left(1 - \exp\left(\frac{-fleche}{Pg * Rroul_{16}}\right)\right)$$

Avec :

$$\kappa_{11} = Rroul_{12} + Rroul_{13} * V$$

$$\kappa_{12} = Rroul_{14} + Rroul_{15} * V$$

$$Rroul_2 = \left(Rroul_{21} + Rroul_{22} * sign(\delta) * V\right) * \frac{1}{Fz^{Rroul_{23}}} * \left(1 - \cos(|\delta|)\right) - \frac{Rroul_{24}}{\pi}\dots$$

$$* \left(1 - \exp\left(\frac{-Fz}{Rroul_{25}}\right)\right) * \frac{1}{V^{Rroul_{26}}}\dots$$

$$* \left[\arctan\left(Rroul_{27} * |\delta| - Rroul_{28} * \exp\left(\frac{-Fz}{Rroul_{29}}\right) * \frac{1}{V^{Rroul_{30}}}\right) + \frac{\pi}{2}\right].$$

Et :

$$Rroul_3 = \left(\kappa_{31} + \kappa_{32} * sign(\delta * \gamma)\right) * \left(1 - \cos(|\gamma|)\right)$$

Avec :

$$\kappa_{31} = Rroul_{33} + Rroul_{34} * \left(1 - \exp\left(\frac{-Fz}{Rroul_{35}}\right)\right)$$

$$\kappa_{32} = Rroul_{36} + Rroul_{37} * Fz$$

où les paramètres $Rroul_{ij}$ sont des valeurs numériques, V est la vitesse du véhicule, flèche est la flèche du pneumatique, Pg est la pression de gonflage du pneumatique, $F_Z$ est la charge verticale sur le pneumatique, $\delta$ est l'angle de dérive, $\gamma$ est l'angle de carrossage. Et :

$$fl\grave{e}che = \frac{F_Z}{K_{ZZ}} + \left(\frac{R_{eY1}}{p} + R_{eY2}\right) \cdot |F_Y| - R_{e\gamma} \cdot |\gamma|$$

où $K_{ZZ}$ est la raideur verticale du pneumatique avec ses composantes pneumatique $K_{ZZp}$ et structurelle $K_{ZZ0}$ et $K_{ZZ}$ s'écrit sous la forme $K_{ZZ} = K_{ZZ0} + K_{ZZp} \times Pg$ , $F_Y$ est l'effort de poussée transversale exercé sur le pneumatique, $\gamma$ est l'angle de carrossage du véhicule, $R_{e\gamma}$ est le coefficient d'influence du carrossage sur la flèche, $R_{eY1}$ est un coefficient qui règle la dépendance de la flèche avec l'effort de poussée transversale exercé et avec la pression de gonflage p et $R_{eY2}$ est un coefficient qui règle la dépendance de la flèche avec l'effort de poussée transversale exercé sans effet de la pression de gonflage,
-- obtention des valeurs des grandeurs $Rroul_{ij}$, V, Pg, $F_z$ , $\delta$, $\gamma$, et des coefficients $R_{e\gamma}$, $R_{eY1}$ et $R_{eY2}$ à utiliser dans la formule d'estimation du rayon effectif de roulement $R_{roul}$ du pneumatique,
-- estimation du rayon effectif de roulement $R_{roul}$ du pneumatique en exécutant le programme du logiciel de l'outil de simulation, en utilisant les valeurs des grandeurs et des coefficients déterminées à l'étape précédente,

- détermination d'un comportement prédéfinit du pneumatique sur la base du rayon effectif de roulement $R_{roul}$ estimé à l'étape précédente, et

-- réalisation d'un pneumatique avec un comportement de roulement prédéfini déterminé à l'étape précédente
c'est à dire en fonction du rayon effectif de roulement $R_{oul}$ du pneumatique en utilisant les valeurs $R_{ouli}$, V, $P_g$, $F_z$, $\delta$, $\gamma$, $R_{ev}$, $R_{ev1}$, $R_{ev2}$

- et **en ce que** à l'étape d'obtention des valeurs, les valeurs des grandeurs Rroulij sont déterminées par des essais physiques à l'aide d'une rouleuse de type sol plan sur un pneumatique représentatif du pneumatique à réaliser selon lesquels :

-- la valeur de $R_{e\gamma}$ est obtenue à partir d'une animation de mesure du rayon effectif de roulement du pneumatique à différentes valeurs d'angle de carrossage,
-- la valeur de $R_{e\gamma1}$ est obtenue à partir d'une animation de mesure du rayon effectif de roulement du pneumatique à différentes valeurs de la pression de gonflage via une valeur d'effort transversal,
-- la valeur de $R_{e\gamma2}$ est obtenue à partir d'une animation de mesure du rayon effectif de roulement du pneumatique à différentes valeurs de l'effort de poussée transversale.

2. Procédé selon l'une quelconque des revendications précédentes, **caractérisé en ce que** préalablement à l'étape de détermination d'un comportement prédéfinit du pneumatique, il comporte une étape d'utilisation du programme du logiciel pour simuler la dynamique des efforts en centre de roue.

3. Procédé selon la revendication précédente, **caractérisé en ce que** les valeurs Rroul$_{ij}$ sont utilisées dans le programme du logiciel pour simuler la dynamique des efforts en centre de roue.

4. Système comprenant un processeur de calcul de comportement de pneumatique de véhicule automobile configuré pour estimer un rayon effectif de roulement du pneumatique à réaliser, **caractérisé :**

- **en ce qu'**il comporte :

-- des instructions de programmation d'une formule d'estimation d'un rayon effectif de roulement Rroul de la forme :

$$Rroul = Rroul_1 + Rroul_2 + Rroul_3 \, ,$$

où :

$$Rroul_1 = Rroul_{11} - \left[ \left( \kappa_{11} + \kappa_{12} * \frac{fleche}{Pg} \right) \right] * \left( 1 - \exp\left( \frac{-fleche}{Pg * Rroul_{16}} \right) \right)$$

Avec :

$$\kappa_{11} = Rroul_{12} + Rroul_{13} * V$$

$$\kappa_{12} = Rroul_{14} + Rroul_{15} * V$$

$$Rroul_2 = \left(Rroul_{21} + Rroul_{22} * sign(\delta) * V\right) * \frac{1}{Fz^{Rroul_{23}}} * \left(1 - \cos(|\delta|)\right) - \frac{Rroul_{24}}{\pi} \ldots$$

$$* \left(1 - \exp\left(\frac{-Fz}{Rroul_{25}}\right)\right) * \frac{1}{V^{Rroul_{26}}} \ldots$$

$$* \left[\arctan\left(Rroul_{27} * |\delta| - Rroul_{28} * \exp\left(\frac{-Fz}{Rroul_{29}}\right) * \frac{1}{V^{Rroul_{30}}}\right) + \frac{\pi}{2}\right].$$

Et :

$$Rroul_3 = \left(\kappa_{31} + \kappa_{32} * sign(\delta * \gamma)\right) * \left(1 - \cos(|\gamma|)\right)$$

Avec :

$$\kappa_{31} = Rroul_{33} + Rroul_{34} * \left(1 - \exp\left(\frac{-Fz}{Rroul_{35}}\right)\right)$$

$$\kappa_{32} = Rroul_{36} + Rroul_{37} * Fz$$

où les paramètres $Rroul_{ij}$ sont des valeurs numériques, V est la vitesse du véhicule, flèche est la flèche du pneumatique, Pg est la pression de gonflage du pneumatique, $F_Z$ est la charge verticale sur le pneumatique, $\delta$ est l'angle de dérive, $\gamma$ est l'angle de carrossage. ET :

$$flèche = \frac{F_Z}{K_{ZZ}} + \left(\frac{R_{eY1}}{p} + R_{eY2}\right) \cdot |F_Y| - R_{e\gamma} |\gamma|$$

où Kzz est la raideur verticale du pneumatique avec ses composantes pneumatique $K_{ZZp}$ et structurelle $K_{ZZ0}$ et $K_{ZZ}$ s'écrit sous la forme $K_{ZZ} = K_{ZZ0} + K_{ZZp} \times Pg$ , $F_Y$ est l'effort de poussée transversale exercé sur le pneumatique, $\gamma$ est l'angle de carrossage du véhicule, $R_{e\gamma}$ est le coefficient d'influence du carrossage sur la flèche, p est la pression de gonflage, $R_{eY1}$ est un coefficient qui règle la dépendance de la flèche avec l'effort de poussée transversale exercé et avec la pression de gonflage p et $R_{eY2}$ est un coefficient qui règle la dépendance de la flèche avec l'effort de poussée transversale exercé sans effet de la pression de gonflage,

-- des instructions de programmation d'estimation du rayon effectif de roulement $R_{roul}$ du pneumatique en exécutant les instructions de programmation de la formule d'estimation du rayon effectif de roulement $R_{roul}$ en utilisant les valeurs calculées ou implémentées de $Rroul_{ij}$, V, Pg, $F_Z$ , $\delta$ , $\gamma$, $R_{e\gamma}$, $R_{eY1}$ et $R_{eY2}$, et,

-- des instructions de programmation de détermination d'un comportement prédéfini du pneumatique sur la base du rayon effectif de roulement $R_{roul}$ estimé ; le système comprenant des moyens de réalisation d'un pneumatique avec un comportement de roulement prédéfini déterminé en fonction du rayon effectif de roulement calculé par ledit processeur

- et **en ce que** les valeurs $Rroul_{ij}$ sont définies par des essais physiques à l'aide d'une rouleuse de type sol plan sur un pneumatique représentatif du pneumatique à selon lesquels :

-- la valeur de $R_{e\gamma}$ est obtenue à partir d'une animation de mesure du rayon effectif de roulement du pneumatique à différentes valeurs d'angle de carrossage,

-- la valeur de $R_{eY1}$ est obtenue à partir d'une animation de mesure du rayon effectif de roulement du pneumatique à différentes valeurs de la pression de gonflage via une valeur d'effort transversal,

-- la valeur de $R_{eY2}$ est obtenue à partir d'une animation de mesure du rayon effectif de roulement du pneumatique à différentes valeurs de l'effort de poussée transversale.

5. Pneumatique de véhicule automobile, **caractérisé :**

    - **en ce qu'**il est réalisé selon le procédé de l'une des revendications 1 à 3.


**Patentansprüche**

1. Verfahren zur Herstellung eines Kraftfahrzeugreifens, **dadurch gekennzeichnet:**

    - **dass** das Verfahren die folgenden Schritte umfasst:

        -- Umsetzen, in einem Programm einer Software eines Simulationswerkzeugs, einer Formel zur Ermittlung eines effektiven Rollradius $R_{roll}$ des Reifens gemäß der Form:

$$Rroll = Rroll_1 + Rroll_2 + Rroll_3,$$

wobei:

$$Rroll_1 = Rroll_{11} - \left[\left(K_{11} + K_{12} * \frac{Abflachung}{Pg}\right)\right] * \left(1 - exp\left(\frac{-Abflachung}{Pg * Rroll_{16}}\right)\right)$$

Mit:

$$K_{11} = Rroll_{12} + Rroll_{13} * V$$

$$K_{12} = Rroll_{14} + Rroll_{15} * V$$

$$Rroll_2 = (Rroll_{21} + Rroll_{22} * sign(\delta) * V) * \frac{1}{Fz^{Rroll_{23}}} * \left(1 - cos(|\delta|)\right)$$
$$- \frac{Rroll_{24}}{\pi} \dots$$
$$* \left(1 - exp\left(\frac{-Fz}{Rroll_{25}}\right)\right) * \frac{1}{V^{Rroll_{26}}} \dots$$
$$* \left[arctan\left(Rroll_{27} * |\delta| - Rroll_{28} * exp\left(\frac{-Fz}{Rroll_{29}}\right) * \frac{1}{V^{Rroll_{30}}}\right) + \frac{\pi}{2}\right].$$

Und:

$$Rroll_3 = \left(K_{31} + K_{32} * sign(\delta * \gamma)\right) * \left(1 - cos(|\gamma|)\right)$$

Mit:

$$K_{31} = Rroll_{33} + Rroll_{34} * \left(1 - exp\left(\frac{-Fz}{Rroll_{35}}\right)\right)$$

$$K_{32} = Rroll_{36} + Rroll_{37} * Fz$$

wobei die Parameter Rroll$_{ij}$ numerische Werte sind, V die Geschwindigkeit des Fahrzeugs ist, Abflachung die Abflachung des Reifens ist, Pg der Reifendruck des Reifens ist, $F_Z$ die vertikale Last auf den Reifen ist, $\delta$ der Schräglaufwinkel ist, $\gamma$ der Sturzwinkel ist. Und:

$$Abflachung = \frac{F_Z}{K_{ZZ}} + \left(\frac{R_{eY1}}{p} + R_{eY2}\right) \cdot |F_Y| - R_{e\gamma} \cdot |\gamma|$$

wobei K$_{ZZ}$ die vertikale Steifigkeit des Reifens mit ihrer pneumatischen Komponente $K_{ZZp}$ und ihrer strukturellen Komponente $K_{ZZ0}$ ist und sich K$_{ZZ}$ gemäß der Form $K_{ZZ} = K_{ZZ0} + K_{ZZp} \times Pg$ schreibt, F$_Y$ die auf den Reifen ausgeübte transversale Schubkraft ist, $\gamma$ der Sturzwinkel des Fahrzeugs ist, $R_{e\gamma}$ der Einflusskoeffizient des Sturzes auf die Abflachung ist, $R_{eY1}$ ein Koeffizient ist, der die Abhängigkeit der Abflachung von der ausgeübten transversalen Schubkraft und von dem Reifendruck p angibt, und $R_{eY2}$ ein Koeffizient ist, der die Abhängigkeit der Abflachung von der ausgeübten transversalen Schubkraft ohne Einwirkung des Reifendrucks angibt,

-- Erhalten der Werte der Größen Rroll$_{ij}$, V, Pg, $F_Z$, $\delta$, $\gamma$ und der Koeffizienten $R_{e\gamma}$, $R_{eY1}$ und $R_{eY2}$, die in der Formel zur Ermittlung des effektiven Rollradius R$_{roll}$ des Reifens zu verwenden sind,

-- Ermitteln des effektiven Rollradius R$_{roll}$ des Reifens durch Ausführung des Programms der Software des Simulationswerkzeugs unter Verwendung der Werte der Größen und Koeffizienten, die in dem vorhergehenden Schritt bestimmt wurden,

- Bestimmen eines vordefinierten Verhaltens des Reifens basierend auf dem effektiven Rollradius R$_{roll}$, der in dem vorhergehenden Schritt ermittelt wurde, und

-- Herstellen eines Reifens mit einem vordefinierten Rollverhalten, das in dem vorhergehenden Schritt bestimmt wurde, das heißt in Abhängigkeit von dem effektiven Rollradius R$_{oll}$ des Reifens unter Verwendung der Werte R$_{olli}$, V, Pg, F$_Z$, $\delta$, $\gamma$, $R_{e\gamma}$, $R_{eY1}$, $R_{eY2}$,

- und **dass** in dem Schritt des Erhaltens der Werte die Werte der Größen Rroll$_{ij}$ durch physische Prüfungen mit Hilfe einer Walze mit ebenem Boden an einem Reifen, der für den herzustellenden Reifen repräsentativ ist, bestimmt werden, gemäß denen:

-- der Wert $R_{e\gamma}$ auf Basis einer Animation zur Messung des effektiven Rollradius des Reifens mit unterschiedlichen Sturzwinkelwerten erhalten wird,

-- der Wert $R_{eY1}$ auf Basis einer Animation zur Messung des effektiven Rollradius des Reifens mit unterschiedlichen Werten des Reifendrucks mittels eines transversalen Kraftwerts erhalten wird,

-- der Wert $R_{eY2}$ auf Basis einer Animation zur Messung des effektiven Rollradius des Reifens mit unterschiedlichen Werten der transversalen Schubkraft erhalten wird.

2. Verfahren nach einem beliebigen der vorhergehenden Ansprüche, **dadurch gekennzeichnet, dass** es vor dem Schritt des Bestimmens eines vordefinierten Verhaltens des Reifens einen Schritt des Verwendens des Programms der Software umfasst, um die Dynamik der Kräfte in der Radmitte zu simulieren.

3. Verfahren nach dem vorhergehenden Anspruch, **dadurch gekennzeichnet, dass** die Werte Rroll$_{ij}$ in dem Programm der Software verwendet werden, um die Dynamik der Kräfte in der Radmitte zu simulieren.

4. System, das einen Prozessor zur Berechnung eines Verhaltens eines Kraftfahrzeugreifens beinhaltet und dazu konfiguriert ist, einen effektiven Rollradius des herzustellenden Reifens zu ermitteln, **dadurch gekennzeichnet:**

- **dass** es Folgendes umfasst:

-- Programmieranweisungen für eine Formel zur Ermittlung eines effektiven Rollradius Rroll gemäß der Form:

$$Rroll = Rroll_1 + Rroll_2 + Rroll_3,$$

wobei:

$$Rroll_1 = Rroll_{11} - \left[\left(K_{11} + K_{12} * \frac{Abflachung}{Pg}\right)\right] * \left(1 - exp\left(\frac{-Abflachung}{Pg * Rroll_{16}}\right)\right)$$

Mit:

$$K_{11} = Rroll_{12} + Rroll_{13} * V$$

$$K_{12} = Rroll_{14} + Rroll_{15} * V$$

$$Rroll_2 = (Rroll_{21} + Rroll_{22} * sign(\delta) * V) * \frac{1}{Fz^{Rroll_{23}}} * \left(1 - cos(|\delta|)\right)$$
$$- \frac{Rroll_{24}}{\pi} \ldots$$
$$* \left(1 - exp\left(\frac{-Fz}{Rroll_{25}}\right)\right) * \frac{1}{V^{Rroll_{26}}} \ldots$$
$$* \left[arctan\left(Rroll_{27} * |\delta| - Rroll_{28} * exp\left(\frac{-Fz}{Rroll_{29}}\right) * \frac{1}{V^{Rroll_{30}}}\right) + \frac{\pi}{2}\right].$$

Und:

$$Rroll_3 = \left(K_{31} + K_{32} * sign(\delta * \gamma)\right) * \left(1 - cos(|\gamma|)\right)$$

Mit:

$$K_{31} = Rroll_{33} + Rroll_{34} * \left(1 - exp\left(\frac{-Fz}{Rroll_{35}}\right)\right)$$

$$K_{32} = Rroll_{36} + Rroll_{37} * Fz$$

wobei die Parameter $Rroll_{ij}$ numerische Werte sind, V die Geschwindigkeit des Fahrzeugs ist, Abflachung die Abflachung des Reifens ist, Pg der Reifendruck des Reifens ist, $F_Z$ die vertikale Last auf den Reifen ist, $\delta$ der Schräglaufwinkel ist, $\gamma$ der Sturzwinkel ist. UND:

$$Abflachung = \frac{F_Z}{K_{ZZ}} + \left(\frac{R_{eY1}}{p} + R_{eY2}\right) \cdot |F_Y| - R_{e\gamma} \cdot |\gamma|$$

wobei $K_{ZZ}$ die vertikale Steifigkeit des Reifens mit ihrer pneumatischen Komponente $K_{ZZp}$ und ihrer strukturellen Komponente $K_{ZZ0}$ ist und sich $K_{ZZ}$ gemäß der Form $K_{ZZ} = K_{ZZ0} + K_{ZZp} \times Pg$ schreibt, $F_Y$ die auf den Reifen ausgeübte transversale Schubkraft ist, $\gamma$ der Sturzwinkel des Fahrzeugs ist, $R_{e\gamma}$ der Einflusskoeffizient des Sturzes auf die Abflachung ist, p der Reifendruck ist, $R_{eY1}$ ein Koeffizient ist, der die Abhängigkeit der Abflachung von der ausgeübten transversalen Schubkraft und von dem Reifendruck p angibt, und $R_{eY2}$ ein Koeffizient ist, der die Abhängigkeit der Abflachung von der ausgeübten transversalen Schubkraft ohne Einwirkung des Reifendrucks angibt,

-- Programmieranweisungen zur Ermittlung des effektiven Rollradius $R_{roll}$ des Reifens durch Ausführung der Programmieranweisungen für die Formel zur Ermittlung des effektiven Rollradius $R_{roll}$ unter Verwendung der berechneten oder implementierten Werte von $Rroll_{ij}$, V, Pg, $F_Z$, $\delta$, $\gamma$, $R_{ey}$, $R_{eY1}$ und $R_{eY2}$, und

-- Programmieranweisungen zur Bestimmung eines vordefinierten Verhaltens des Reifens basierend auf dem ermittelten effektiven Rollradius $R_{roll}$;

wobei das System Mittel zur Herstellung eines Reifens mit einem vordefinierten Rollverhalten, das in Abhängigkeit von dem effektiven Rollradius, der durch den Prozessor berechnet wurde, bestimmt wurde, beinhaltet,

- und **dass** die Werte $Rroll_{ij}$ durch physische Prüfungen mit Hilfe einer Walze mit ebenem Boden an einem Reifen, der für den Reifen repräsentativ ist, definiert werden, gemäß denen:

-- der Wert $R_{e\gamma}$ auf Basis einer Animation zur Messung des effektiven Rollradius des Reifens mit unterschiedlichen Sturzwinkelwerten erhalten wird,

-- der Wert $R_{eY1}$ auf Basis einer Animation zur Messung des effektiven Rollradius des Reifens mit unterschiedlichen Werten des Reifendrucks mittels eines transversalen Kraftwerts erhalten wird,

-- der Wert $R_{eY2}$ auf Basis einer Animation zur Messung des effektiven Rollradius des Reifens mit unterschiedlichen Werten der transversalen Schubkraft erhalten wird.

5. Kraftfahrzeugreifen, **dadurch gekennzeichnet:**

- **dass** er gemäß dem Verfahren nach einem der Ansprüche 1 bis 3 hergestellt wird.

**Claims**

1. Method for producing a motor vehicle tyre, **characterized in that** it comprises the following steps :

- - implementing, in a software for simulating an estimation formula of an effective rolling radius $R_{roll}$ of the tyre by way of a formula of the form:

$$Rroll = Rroll_1 + Rroll_2 + Rroll_3 \, ,$$

where:

$$Rroll_1 = Rroll_{11} - \left[\left(\kappa_{11} + \kappa_{12} * \frac{deflect}{Pg}\right)\right] * \left(1 - \exp\left(\frac{-deflect}{Pg * Rroll_{16}}\right)\right)$$

with:

$$\kappa_{11} = Rroll_{12} + Rroll_{13} * V$$

$$\kappa_{12} = Rroll_{14} + Rroll_{15} * V$$

$$Rroll_2 = \left(Rroll_{21} + Rroll_{22} * sign(\delta) * V\right) * \frac{1}{Fz^{Rroll_{23}}} * \left(1 - \cos(|\delta|)\right) - \frac{Rroll_{24}}{\pi} \dots$$

$$* \left(1 - \exp\left(\frac{-Fz}{Rroll_{25}}\right)\right) * \frac{1}{V^{Rroll_{26}}} \dots$$

$$* \left[\arctan\left(Rroll_{27} * |\delta| - Rroll_{28} * \exp\left(\frac{-Fz}{Rroll_{29}}\right) * \frac{1}{V^{Rroll_{30}}}\right) + \frac{\pi}{2}\right].$$

and:

$$Rroll_3 = \left(\kappa_{31} + \kappa_{32} * sign(\delta * \gamma)\right) * \left(1 - \cos(|\gamma|)\right)$$

with:

$$\kappa_{31} = Rroll_{33} + Rroll_{34} * \left(1 - \exp\left(\frac{-Fz}{Rroll_{35}}\right)\right)$$

$$\kappa_{32} = Rroll_{36} + Rroll_{37} * Fz$$

where the parameters $Rroll_{ij}$ are numerical values, V is the speed of the vehicle, deflect is the deflection of the tyre, Pg is the inflation pressure of the tyre, $F_Z$ is the vertical load on the tyre, $\delta$ is the cornering angle, $\gamma$ is the camber angle, and

$$deflect = \frac{F_Z}{K_{ZZ}} + \left(\frac{R_{eY1}}{p} + R_{eY2}\right) \cdot |F_Y| - R_{e\gamma} \cdot |\gamma|$$

where $K_{ZZ}$ is the vertical stiffness of the tyre with its pneumatic component $K_{ZZp}$ and structural component $K_{ZZ0}$ and $K_{ZZ}$ is written in the form $K_{ZZ} = K_{ZZ0} + K_{ZZp} \times Pg$, Fy is the transverse thrust force exerted on the tyre, $\gamma$ is the camber angle of the vehicle, $R_{e\gamma}$ is the coefficient of influence of the camber on the deflection, p is the inflation pressure, $R_{eY1}$ is a coefficient which regulates the dependence of the deflection on the transverse thrust force exerted and on the inflation pressure p, and $R_{eY2}$ is a coefficient which regulates the dependence of the deflection on the transverse thrust force exerted without the inflation pressure effect,

- obtaining values of parameters $Rroll_{ij}$, Pg, V, $\delta$, $\gamma$ and coefficients $R_{e\gamma}$, $R_{eY1}$, $R_{eY2}$, to be used in the estimation formula of effective rolling radius $R_{roll}$
- estimating the effective rolling radius $R_{roll}$ of the tyre by executing the software for simulating, carrying out the parameters and coefficients determined in the previous step, and
- determining a predefined behavior of the tyre, on the basis of the estimated effective rolling radius $R_{roll}$ determined in the previous step.
- manufacturing a tyre with a predetermined driving behaviour determined in the previous step, which means depending on the effective rolling radius $R_{roll}$, by using the values Rroll, $P_g$, V, $F_z$, $\delta$, $\gamma$ and coefficients $R_{e\gamma}$, $R_{eY1}$, $R_{eY2}$,

And **characterized in that**,
- in the step of obtaining values, the values of coefficients $Rroll_{ij}$, are determined via the physical tests carried out with the aid of a roller of the flat ground type on a tyre representative of the tyre to be manufactured, with :

- the value of $R_{e\gamma}$ is obtained by a measurement animation of the effective rolling radius at different values of a camber angle value of the vehicle.

the value of $R_{eY1}$ is obtained by a measurement animation of the effective rolling radius at different values of inflation pressure via a transverse load value,

- the value of $R_{eY2}$ is obtained by a measurement animation of the effective rolling radius at different values of transverse load

2. Method according to any one of the preceding claims, **characterized in that** it includes the step of using software for simulating the force dynamics at the wheel centre.

3. Method according to the preceding claim, **characterized in that** it comprises the step of using the $\text{Rroll}_{ij}$ values in the software for simulating the force dynamics at the wheel centre.

4. System comprising a processor for calculating the behaviour of a motor vehicle tyre, said processor being configured to estimate an effective rolling radius of the tyre, **characterized in that** it is configured to determine the effective rolling radius Rroll by using a formula of the form:

$$Rroll = Rroll_1 + Rroll_2 + Rroll_3 \,,$$

where:

$$Rroll_1 = Rroll_{11} - \left[\left(\kappa_{11} + \kappa_{12} * \frac{deflect}{Pg}\right)\right] * \left(1 - \exp\left(\frac{-deflect}{Pg * Rroll_{16}}\right)\right)$$

with:

$$\kappa_{11} = Rroll_{12} + Rroll_{13} * V$$

$$\kappa_{12} = Rroll_{14} + Rroll_{15} * V$$

$$Rroll_2 = \left(Rroll_{21} + Rroll_{22} * sign(\delta) * V\right) * \frac{1}{Fz^{Rroll_{23}}} * \left(1 - \cos\left(|\delta|\right)\right) - \frac{Rroll_{24}}{\pi} \ldots$$

$$* \left(1 - \exp\left(\frac{-Fz}{Rroll_{25}}\right)\right) * \frac{1}{V^{Rroll_{26}}} \ldots$$

$$* \left[\arctan\left(Rroll_{27} * |\delta| - Rroll_{28} * \exp\left(\frac{-Fz}{Rroll_{29}}\right) * \frac{1}{V^{Rroll_{30}}}\right) + \frac{\pi}{2}\right].$$

and:

$$Rroll_3 = \left(\kappa_{31} + \kappa_{32} * sign(\delta * \gamma)\right) * \left(1 - \cos\left(|\gamma|\right)\right)$$

with:

$$\kappa_{31} = Rroll_{33} + Rroll_{34} * \left(1 - \exp\left(\frac{-Fz}{Rroll_{35}}\right)\right)$$

$$\kappa_{32} = Rroll_{36} + Rroll_{37} * Fz$$

where the parameters $Rroll_{ij}$ are numerical values, V is the speed of the vehicle, deflect is the deflection of the tyre, Pg is the inflation pressure of the tyre, $F_Z$ is the vertical load on the tyre, $\delta$ is the cornering angle, $\gamma$ is the camber angle and

$$deflect = \frac{F_Z}{K_{ZZ}} + \left(\frac{R_{eY1}}{p} + R_{eY2}\right) \cdot |F_Y| - R_{e\gamma} \cdot |\gamma|$$

where $K_{ZZ}$ is the vertical stiffness of the tyre with its pneumatic component $K_{ZZp}$ and structural component $K_{ZZ0}$ and $K_{ZZ}$ is written in the form $K_{ZZ} = K_{ZZ0} + K_{ZZp} \times Pg$, $F_Y$ is the transverse thrust force exerted on the tyre, $\gamma$ is the camber angle of the vehicle, $R_{e\gamma}$ is the coefficient of influence of the camber on the deflection, p is the inflation pressure, $R_{eY1}$ is a coefficient which regulates the dependence of the deflection on the transverse thrust force exerted and on the inflation pressure p, and $R_{eY2}$ is a coefficient which regulates the dependence of the deflection on the transverse thrust force exerted without the inflation pressure effect,

  - instructions for programming an estimation of the effective rolling radius Rroll. by executing instructions for programming an estimation formula of the effective rolling radius Rroll using calculated or implemented value of values Rroll, Pg, V, $F_z$, $\delta$, $\gamma$ and coefficients $R_{e\gamma}$ $R_{eY1}$, $R_{eY2}$ ,and
  - instructions for programming determination of a predetermined behavior of the tire on the basis of the estimated rolling radius Rroll,
  the system comprising means for manufacturing a tire with a predetermined rolling behavior predetermined based on the effective rolling radius calculated by said processor, and **in that**
  - the values of coefficients $Rroll_{ij}$, are determined via the physical tests carried out with the aid of a roller of the flat ground type on a tyre representative of the tyre to be manufactured, with :

    - the value of $R_{e\gamma}$ is obtained by a measurement animation of the effective rolling radius at different values of a camber angle value of the vehicle.
    the value of $R_{eY1}$ is obtained by a measurement animation of the effective rolling radius at different values of inflation pressure via a transverse load value,
    - the value of $R_{eY2}$ is obtained by a measurement animation of the effective rolling radius at different values of transverse load.

5. Tire for an automotive vehicle, **characterized in that** it is manufactured according the method of any of claims 1 to 3.

FIG.1

FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2004161210 B
- WO 2012071379 A

**Littérature non-brevet citée dans la description**

- *UniTire unified tire model for vehicle dynamic simulation*
- *Assessing the thermo-mechanical TaMeTirE model in offline vehicle simulation and driving simulator tests*
- *Modelling of tire overtuning moment and loaded radius*
- *Overturning moment analysis using the Flat plank tyre tester*
- *Research of Tire Rolling Radius Based On the Finite Vibration Unit Model*
- *A Simple Analysis Method for Contact Déformation of Rolling Tire*